# FASCICULE DE BREVET EUROPEEN

(11) **EP 2 605 080 B1**
(45) Date de publication et mention de la délivrance du brevet: **10.09.2014**
(21) Numéro de dépôt: 11194064.9
(22) Date de dépôt: 16.12.2011
(51) Int. Cl.: G04B 13/02, G04B 15/14

(54) **Roue d'horlogerie surmoulée**
Konfektioniertes Rad eines Uhrwerks
Overmoulded timepiece wheel

(43) Date de publication de la demande: 19.06.2013
(73) Titulaire: ETA SA Manufacture Horlogère Suisse, 2540 Grenchen (CH)
(72) Inventeur: Villar, Ivan, 2504 Bienne (CH); Kaelin, Laurent, 2615 Sonvilier (CH); Tinguely, Xavier, 2046 Fontaines (CH)
(74) Mandataire: Giraud, Eric

(56) Documents cités:
- EP-A2- 0 369 704
- FR-A1- 2 020 572
- US-A- 3 930 362

## Description

### Domaine de l'invention

L'invention concerne une roue d'horlogerie surmoulée comportant un arbre, ladite roue comportant une rondelle métallique et étant surmoulée par injection de matière plastique sur ladite rondelle métallique enfilée sur ledit arbre.

L'invention concerne encore un mécanisme d'échappement d'horlogerie.

L'invention concerne encore un mouvement d'horlogerie.

L'invention concerne encore une pièce d'horlogerie.

L'invention concerne encore un procédé de fabrication d'une roue d'horlogerie surmoulée.

L'invention concerne le domaine de l'horlogerie, et plus particulièrement le domaine des composants montés pivotants et oscillants, capables d'une réalisation en surmoulage de matière plastique sur une armature métallique.

### Arrière-plan de l'invention

L'utilisation de composants d'horlogerie surmoulés est souvent avantageuse, en termes de coûts de production réduits pour des fabrications de grande série. De plus, l'inertie des composants est inférieure à celle de composants métalliques de même géométrie, ce qui est favorable pour le rendement global du mouvement. Le surmoulage se fait en général pour des roues ou des mobiles, sur et autour d'un arbre métallique, dont une ou plusieurs portées laissées dégagées coopèrent avec des pivots ou similaire.

Les matières plastiques choisies pour leurs qualités tribologiques, ainsi que pour leur adhérence à leur armature métallique, le plus souvent un arbre, présentent toutefois l'inconvénient du fluage/dilatation. Ceci provoque des problèmes de tenue en servie, et induit une perte de géométrie de la ou des dentures des roues ou pignons ainsi fabriqués.

Le document EP 0 369 704 A2 au nom de SHIOJIRI KOGYO, décrit un arbre épaulé avec un flasque monobloc, et une denture en matière plastique en périphérie de cet arbre, et notamment moulée sur lui. Le document FR 2 020 572 A1 au nom de WITTNER décrit une roue de rencontre de métronome moulée d'une seule pièce en matière plastique avec un barillet et sa roue, et notamment sur une gorge crantée d'un arbre. Le document US 3 930 362 A au nom de CIELASZYK décrit une roue dont la planche et la denture sont en matière plastique surmoulée sur un arbre, au droit d'une gorge de celui-ci.

### Résumé de l'invention

L'invention se propose d'améliorer la tenue en service et la précision des roues d'horlogerie surmoulées.

A cet effet, l'invention concerne une roue d'horlogerie surmoulée comportant un arbre, ladite roue comportant une rondelle métallique et étant surmoulée par injection de matière plastique sur ladite rondelle métallique enfilée sur ledit arbre, caractérisée en ce que ladite roue comporte encore au moins un pignon monté coaxial audit arbre, et en ce que ledit pignon est, ou bien en appui sur ladite rondelle ou bien solidaire de ladite rondelle, et en ce que la partie surmoulée en dite matière plastique de surmoulage recouvre ladite rondelle et une partie dudit pignon.

Selon une caractéristique de l'invention, ladite rondelle comporte au moins une surface plane constituant une surface d'appui et d'étanchéité pour coopérer de façon étanche avec un moule d'injection pour la réalisation du surmoulage.

L'invention concerne encore un mécanisme d'échappement d'horlogerie comportant au moins une telle roue d'échappement surmoulée.

L'invention concerne encore un mouvement d'horlogerie comportant au moins une telle roue d'horlogerie surmoulée, ou/et un mécanisme d'échappement d'horlogerie comportant au moins une telle roue d'échappement surmoulée.

L'invention concerne encore une pièce d'horlogerie comportant au moins une telle roue d'horlogerie surmoulée, ou/et un mécanisme d'échappement d'horlogerie comportant au moins une telle roue d'échappement surmoulée.

L'invention concerne encore un procédé de fabrication d'une roue d'horlogerie surmoulée, caractérisé en ce que l'on effectue les étapes suivantes :
- on prépare un arbre qui est destiné à être incorporé à ladite roue, soit en le fabriquant avec un épaulement formant flasque comportant au moins une surface d'appui plane et d'étanchéité, soit en enfilant sur ledit arbre une rondelle métallique comportant au moins une surface d'appui plane;
- on rapporte un pignon en l'enfilant sur ledit arbre en appui sur ladite rondelle,
- on dispose ledit arbre ainsi préparé dans un moule d'injection comportant une surface complémentaire d'appui et d'étanchéité agencée pour coopérer de façon étanche avec ladite surface plane constituant une surface d'appui et d'étanchéité;
- on injecte une matière plastique en surmoulage dudit arbre dans ledit moule, et, lors du surmoulage dans ledit moule, on immobilise une partie dudit pignon par la matière plastique utilisée pour le surmoulage.

### Description sommaire des dessins

D'autres caractéristiques et avantages de l'invention apparaîtront à la lecture de la description détaillée qui va suivre, en référence aux figures annexées où :
- la figure 1 représente, de façon schématisée, en perspective et en transparence, une roue d'horlogerie surmoulé dans une réalisation particulière sous forme d'une roue d'échappement comportant un pignon d'échappement ;
- la figure 2 représente, de façon schématisée et en coupe selon un plan passant par son axe de pivotement, la roue de la figure 1 avec une première variante de rondelle;
- la figure 3 représente, de façon schématisée et en coupe selon un plan passant par son axe de pivotement, une autre variante de rondelle incorporée à la roue ;
- la figure 4 représente, sous forme d'un schéma-blocs, une pièce d'horlogerie comportant un mouvement comportant lui-même un mécanisme d'échappement avec une roue d'échappement selon l'invention.

### Description détaillée des modes de réalisation préférés

L'invention concerne le domaine de l'horlogerie, et plus particulièrement le domaine des composants montés pivotants et oscillants, capables d'une réalisation en surmoulage de matière plastique sur une armature métallique.

L'invention concerne plus particulièrement une roue d'horlogerie surmoulée 1 sur un arbre 2 d'axe de pivotement D.

Selon l'invention, cette roue d'horlogerie surmoulée 1 est surmoulée par injection de matière plastique sur une rondelle métallique 3 enfilée sur l'arbre 2.

Dans une réalisation particulière, la rondelle 3 comporte au moins une surface plane 4 constituant une surface d'appui et d'étanchéité 40 pour coopérer de façon étanche avec un moule d'injection pour la réalisation du surmoulage.

Dans son exécution sous forme d'un mobile d'horlogerie, la roue d'horlogerie surmoulée 1 comporte au moins un pignon 5 monté coaxial à cet arbre 2.

Avantageusement, la denture du pignon 5 traverse toute la longueur du pignon 5, ce qui permet d'utiliser toute la partie découverte de ce pignon, et de réduire la hauteur des mouvements.

De préférence, le pignon 5 est monté en appui sur la rondelle 3, ou est solidaire de la rondelle 3.

On souhaite, en faisant le choix d'une roue surmoulée, obtenir une faible inertie. A cet effet, la rondelle 3 est avantageusement ajourée avec des jours ou des lumières 12, pour réduire son inertie par rapport à l'axe D.

De façon préférée, le diamètre de la rondelle 3 est supérieur à la moitié du plus grand diamètre de la roue 1, qui se situe au niveau d'une partie périphérique en matière plastique 11.

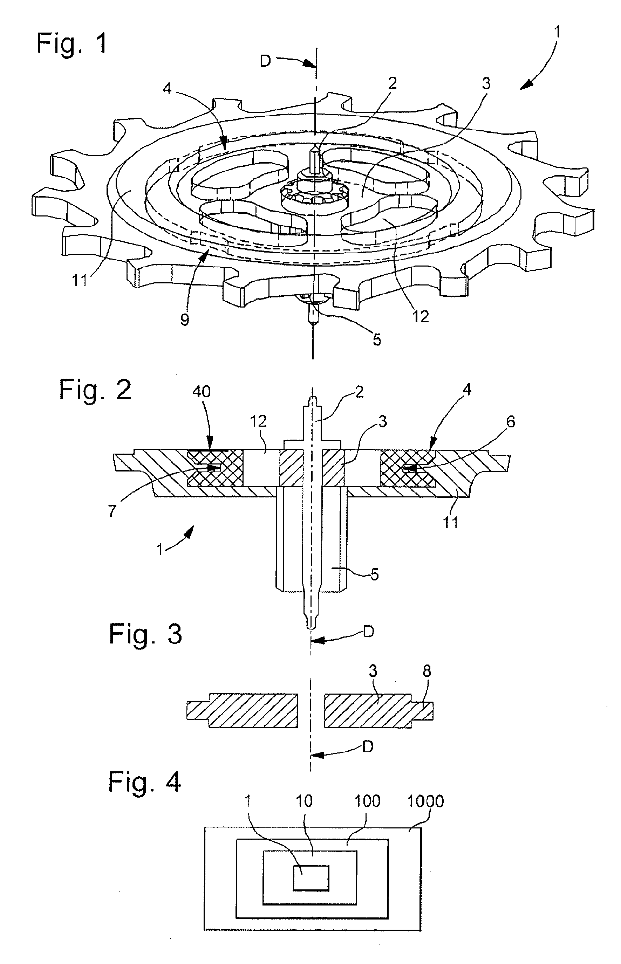

Pour garantir un bon maintien en service de la partie surmoulée 11 sur l'armature métallique et en particulier sur la rondelle 3, celle-ci comporte au moins un premier profil périphérique 6 saillant ou rentrant, ou une gorge 7 de révolution par rapport à l'axe D ou un épaulement 8 de révolution par rapport à l'axe D, pour immobiliser axialement la matière plastique surmoulée après l'opération de surmoulage. De façon avantageuse, la rondelle 3 comporte au moins un deuxième profil périphérique 9 saillant ou rentrant pour immobiliser angulairement la matière plastique surmoulée après l'opération de surmoulage. Ces deux profils périphériques 6 et 9 peuvent être cumulés, comme dans l'exemple de la figure 1.

Dans une réalisation particulière et avantageuse, illustrée par les figures, la roue d'horlogerie surmoulée 1 est une roue d'échappement dont les dents sont réalisées lors du surmoulage sur l'axe 2 et sur la rondelle 3, et elle comporte un pignon d'échappement monté en appui sur la rondelle 3 ou solidaire de la rondelle 3.

L'invention concerne encore un mécanisme d'échappement d'horlogerie 10 comportant au moins une telle roue d'échappement surmoulée 1.

L'invention concerne un mouvement d'horlogerie 100 comportant au moins une telle roue d'horlogerie surmoulée 1, ou/et un tel mécanisme d'échappement d'horlogerie 10 comportant au moins une telle roue d'échappement surmoulée 1.

L'invention concerne encore une pièce d'horlogerie 1000 comportant au moins une telle roue d'horlogerie surmoulée 1, ou/et un mécanisme d'échappement d'horlogerie 10 comportant au moins une telle roue d'échappement surmoulée 1.

L'invention concerne encore un procédé de fabrication d'une roue d'horlogerie surmoulée 1. Selon l'invention, on effectue les étapes suivantes :
- on prépare un arbre 2 qui est destiné à être incorporé à la roue 1, en enfilant sur l'arbre 2 une rondelle métallique 3 comportant au moins une surface d'appui plane 4 ;
- on dispose l'arbre ainsi préparé dans un moule d'injection comportant une surface complémentaire d'appui et d'étanchéité agencée pour coopérer de façon étanche avec la surface d'appui et d'étanchéité 40;
- on injecte une matière plastique en surmoulage de l'arbre dans le moule.

Selon l'invention, lors de la préparation de l'arbre 2, on rapporte un pignon 5 en l'enfilant sur l'arbre 2 en appui sur la rondelle 3, et, lors du surmoulage dans le moule, on immobilise une partie du pignon 5 par la matière plastique utilisée pour le surmoulage.

En somme, l'introduction d'une rondelle intermédiaire rigide, de préférence métallique, permet de minimiser l'effet de fluage/dilatation. L'invention peut naturellement mettre en oeuvre une rondelle non métallique, à condition que sa rigidité soit très nettement supérieure à celle de la matière plastique surmoulé.

L'utilisation d'une rondelle avec une surface d'appui plane permet de faciliter l'étanchéité dans le moule d'injection. En effet, quand on réalise un mobile comportant un pignon dont la denture se développe sur toute la longueur du pignon, l'étanchéité devrait, faute d'une telle surface plane d'appui, se faire au travers de la denture du pignon, ce qui et quasiment impossible.

## Revendications

1. Roue d'horlogerie surmoulée (1) comportant un arbre (2) d'axe de pivotement (D), ladite roue (1) comportant une rondelle métallique (3) et étant surmoulée par injection de matière plastique sur ladite rondelle métallique (3) enfilée sur ledit arbre (2), **caractérisée en ce que** ladite roue (1) comporte encore au moins un pignon (5) monté coaxial audit arbre (2), et **en ce que** ledit pignon (5) est, ou bien en appui sur ladite rondelle (3) ou bien solidaire de ladite rondelle (3), et **en ce que** la partie surmoulée (11) en dite matière plastique de surmoulage recouvre ladite rondelle (3) et une partie dudit pignon (5).

2. Roue d'horlogerie surmoulée (1) selon la revendication 1, **caractérisée en ce que** ladite rondelle (3) est en appui sur une collerette que comporte ledit arbre (2) qui est saillante radialement par rapport audit arbre (2), et **en ce que** ledit pignon (5) est distinct de ladite rondelle (3) et en appui sur ladite rondelle (3) du côté opposé à ladite collerette.

3. Roue d'horlogerie surmoulée (1) selon la revendication 1 ou 2, **caractérisée en ce que** ladite rondelle (3) comporte au moins une surface plane (4) constituant une surface d'appui et d'étanchéité (40) pour coopérer de façon étanche avec un moule d'injection pour la réalisation du surmoulage.

4. Roue d'horlogerie surmoulée (1) selon l'une des revendications précédentes, **caractérisée en ce que** la denture dudit pignon (5) traverse toute la longueur dudit pignon (5).

5. Roue d'horlogerie surmoulée (1) selon l'une des revendications précédentes, **caractérisée en ce que** ladite rondelle (3) est ajourée pour réduire son inertie par rapport audit axe (D).

6. Roue d'horlogerie surmoulée (1) selon l'une des revendications précédentes, **caractérisée en ce que** le diamètre de ladite rondelle (3) est supérieur à la moitié du plus grand diamètre de ladite roue (1).

7. Roue d'horlogerie surmoulée (1) selon l'une des revendications précédentes, **caractérisée en ce que** ladite rondelle (3) comporte au moins un premier profil périphérique (6) saillant ou rentrant, ou une gorge (7) de révolution par rapport audit axe (D) ou un épaulement (8) de révolution par rapport audit axe (D), pour immobiliser axialement la matière plastique surmoulée après l'opération de surmoulage, ou/et **en ce que** ladite rondelle (3) comporte au moins un deuxième profil périphérique (9) saillant ou rentrant pour immobiliser angulairement la matière plastique surmoulée après l'opération de surmoulage.

8. Roue d'horlogerie surmoulée (1) selon l'une des revendications précédentes, **caractérisée en ce qu'**elle est une roue d'échappement dont les dents sont réalisées lors du surmoulage sur ledit axe (2) et ladite rondelle (3), et qu'elle comporte un pignon d'échappement monté en appui sur ladite rondelle (3) ou solidaire de ladite rondelle (3).

9. Mécanisme d'échappement d'horlogerie (10) comportant au moins une roue d'échappement surmoulée (1) selon la revendication précédente.

10. Mouvement d'horlogerie (100) comportant au moins une roue d'horlogerie surmoulée (1) selon l'une des revendications 1 à 8, ou/et un mécanisme d'échappement d'horlogerie (10) comportant au moins une roue d'échappement surmoulée (1) selon la revendication 8.

11. Pièce d'horlogerie (1000) comportant au moins une roue d'horlogerie surmoulée (1) selon l'une des revendications 1 à 8, ou/et un mécanisme d'échappement d'horlogerie (10) comportant au moins une roue d'échappement surmoulée (1) selon la revendication 8.

12. Procédé de fabrication d'une roue d'horlogerie surmoulée (1), comportant les étapes suivantes:
- on prépare un arbre (2) qui est destiné à être incorporé à ladite roue (1), en enfilant sur ledit arbre (2) une rondelle métallique (3) comportant au moins une surface d'appui plane (4) ;
**caractérisé en ce que** l'on effectue également les étapes suivantes :
- on rapporte un pignon (5) en l'enfilant sur ledit arbre (2) en appui sur ladite rondelle (3),
- on dispose ledit arbre ainsi préparé dans un moule d'injection comportant une surface complémentaire d'appui et d'étanchéité agencée pour coopérer de façon étanche avec ladite surface plane (4) constituant une surface d'appui et d'étanchéité (40) ;
- on injecte une matière plastique en surmoulage dudit arbre dans ledit moule, et, lors du surmoulage dans ledit moule, on immobilise une partie dudit pignon (5) par la matière plastique (11) utilisée pour le surmoulage.

## Patentansprüche

1. Eingegossenes Uhrenrad (1), das eine Welle (2) mit Drehachse (D) umfasst, wobei das Rad (1) eine metallische runde Scheibe (3) aufweist und durch Einspritzen von Kunststoff auf die metallische runde Scheibe (3), die auf der Welle (2) angeordnet ist, eingegossen ist, **dadurch gekennzeichnet, dass** das Rad (1) außerdem wenigstens ein zu der Welle (2) koaxial montiertes Ritzel (5) umfasst, und dass das Ritzel (5) sich entweder an der runden Scheibe (3) abstützt oder mit der runden Scheibe (3) fest verbunden ist und dass der mit dem Eingießkunststoff eingegossene Teil (11) die runde Scheibe (3) und einen Teil des Ritzels (5) abdeckt.

2. Eingegossenes Uhrenrad (1) nach Anspruch 1, **dadurch gekennzeichnet, dass** sich die runde Scheibe (3) an einem Kranz abstützt, den die Welle (2) aufweist und der in Bezug auf die Welle (2) radial vorsteht, und dass das Ritzel (5) von der runden Scheibe (3) verschieden ist und sich an der runden Scheibe (3) auf der dem Kranz gegenüberliegenden Seite abstützt.

3. Eingegossenes Uhrenrad (1) nach Anspruch 1 oder 2, **dadurch gekennzeichnet, dass** die runde Scheibe (3) wenigstens eine ebene Oberfläche (4) aufweist, die eine Abstütz- und Dichtungsoberfläche (40) bildet, um mit einer Einspritzform für die Ausführung des Eingießens dicht zusammenzuwirken.

4. Eingegossenes Uhrenrad (1) nach einem der vorhergehenden Ansprüche, **dadurch gekennzeichnet, dass** die Zahnung des Ritzels (5) über die gesamte Länge des Ritzels (5) verläuft.

5. Eingegossenes Uhrenrad (1) nach einem der vorhergehenden Ansprüche, **dadurch gekennzeichnet, dass** die runde Scheibe (3) durchbrochen ist, um seine Trägheit in Bezug auf die Achse (D) zu verringern.

6. Eingegossenes Uhrenrad (1) nach einem der vorhergehenden Ansprüche, **dadurch gekennzeichnet, dass** der Durchmesser der runden Scheibe (3) größer als die Hälfte des größten Durchmessers des Rades (1) ist.

7. Eingegossenes Uhrenrad (1) nach einem der vorhergehenden Ansprüche, **dadurch gekennzeichnet, dass** die runde Scheibe (3) wenigstens ein erstes vorstehendes oder zurückspringendes Umfangsprofil (6) oder eine in Bezug auf die Achse (D) rotationssymmetrische Kehle (7) oder eine in Bezug auf die Achse (D) rotationssymmetrische Schulter (8) aufweist, um den eingegossenen Kunststoff nach dem Eingießvorgang axial unbeweglich zu machen, oder/und dass die runde Scheibe (3) wenigstens ein zweites vorstehendes oder zurückspringendes Umfangsprofil (9) aufweist, um den eingegossenen Kunststoff nach dem Eingießvorgang in Winkelrichtung unbeweglich zu machen.

8. Eingegossenes Uhrenrad (1) nach einem der vorhergehenden Ansprüche, **dadurch gekennzeichnet, dass** es ein Hemmungsrad ist, dessen Zähne beim Übergießen der Achse (2) und der Scheibe (3) verwirklicht werden und dass es ein Hemmungsritzel aufweist, das so montiert ist, dass es sich auf der runden Scheibe (3) abstützt oder an der runden Scheibe (3) befestigt ist.

9. Uhrenhemmungsmechanismus (10), der wenigstens ein eingegossenes Hemmungsrad (1) nach dem vorhergehenden Anspruch umfasst.

10. Uhrwerk (100), das wenigstens ein eingegossenes Uhrenrad (1) nach einem der Ansprüche 1 bis 8 oder/und einen Uhrenhemmungsmechanismus (10), der wenigstens ein eingegossenes Hemmungsrad (1) nach Anspruch 8 enthält, umfasst.

11. Zeitmessgerät (1000), das wenigstens ein eingegossenes Uhrenrad (1) nach einem der Ansprüche 1 bis 8 oder/und einen Uhrenhemmungsmechanismus (10), das wenigstens ein eingegossenes Hemmungsrad (1) nach Anspruch 8 enthält, umfasst.

12. Verfahren zum Fertigen eines eingegossenen Uhrenrads (1), das die folgenden Schritte umfasst:
- Vorbereiten einer Welle (2), die dazu bestimmt ist, an das Rad (1) angefügt zu werden, indem auf der Welle (2) eine metallische runde Scheibe (3) angeordnet wird, die wenigstens eine ebene Abstützoberfläche (4) aufweist;
**dadurch gekennzeichnet, dass** außerdem die folgenden Schritte ausgeführt werden:
- Anfügen eines Ritzels (5), indem es auf der Welle (2) so angeordnet wird, dass es sich auf der runden Scheibe (3) abstützt,
- Anordnen der so vorbereiteten Welle in einer Einspritzform, die eine komplementäre Abstütz- und Dichtungsoberfläche aufweist, die dazu ausgelegt ist, mit der ebenen Oberfläche (4), die eine Abstütz- und Dichtungsoberfläche (40) bildet, dicht zusammenzuwirken;
- Einspritzen eines Kunststoffs und dabei Eingießen der Welle in der Form und während des Eingießens in der Form Unbeweglichmachen eines Teils des Ritzels (5) durch den Kunststoff (11), der für das Eingießen verwendet wird.

## Claims

1. Overmoulded timepiece wheel (1) including an arbour (2) having a pivot axis (D), said wheel (1) including a metal washer (3) and being plastic injection overmoulded onto said metal washer (3) fitted onto said arbour (2), **characterized in that** said wheel (1) still includes at least one pinion (5) coaxially mounted to said arbour (2), and **in that** said pinion (5) is mounted in abutment on said washer (3) or is integral with said washer (3), and **in that** the injected plastic material overmoulded area (11) covers said washer (3) and a part of said pinion (5).

2. Overmoulded timepiece wheel (1) according to claim 1, **characterized in that** said washer (3) is in abutment on a flange included in said arbour (2) and said flange being radially projecting out said arbour (2), and **in that** said pinion (5) is distinct of said washer (3) and in abutment on said washer (3) on a side opposite to said flange.

3. Overmoulded timepiece wheel (1) according to claim 1 or 2, **characterized in that** said washer (3) includes at least one plane surface (4) forming a bearing and sealing surface (40) for cooperating in a sealed manner with an injection mould for the overmoulding operation.

4. Overmoulded timepiece wheel (1) according to any of preceding claims, **characterized in that** the toothing of said pinion (5) traverses the entire length of said pinion (5).

5. Overmoulded timepiece wheel (1) according to any of the preceding claims, **characterized in that** said washer (3) is pierced with holes to reduce the inertia thereof in relation to said axis (D).

6. Overmoulded timepiece wheel (1) according to any of the preceding claims, **characterized in that** the diameter of said washer (3) is greater than half the largest diameter of said wheel (1).

7. Overmoulded timepiece wheel (1) according to any of the preceding claims, **characterized in that** said washer (3) includes at least a first peripheral projecting or recessed profile (6), or a groove (7) of revolution about said axis (D) or a shoulder (8) of revolution about said axis (D), to axially immobilise the overmoulded plastic material after the overmoulding operation, or/and **in that** said washer (3) includes at least a second peripheral projecting or recessed profile (9) for angularly immobilising the overmoulded plastic material after the overmoulding operation.

8. Overmoulded timepiece wheel (1) according to any of the preceding claims, **characterized in that** said wheel is an escape wheel whose teeth are formed during overmoulding onto said arbour (2) and said washer (3), and **in that** said wheel includes an escape pinion mounted in abutment on said washer (3) or integral with said washer (3).

9. Timepiece escapement mechanism (10) including at least one overmoulded escape wheel (1) according to the preceding claim.

10. Timepiece movement (100) including at least one overmoulded timepiece wheel (1) according to any of claims 1 to 8, and/or a timepiece escapement mechanism (10) including at least one overmoulded escape wheel (1) according to claim 8.

11. Timepiece (1000) including at least one overmoulded timepiece wheel (1) according to any of claims 1 to 8, and/or a timepiece escapement mechanism (10) including at least one overmoulded escape wheel (1) according to claim 8.

12. Method of manufacturing an overmoulded timepiece wheel (1), including the following steps:
- an arbour (2) is prepared for incorporation into said wheel (1), by fitting a metal washer (3) including at least one plane bearing surface (4) onto said arbour (2),
**characterized in that** the following steps are still performed:
- a pinion (5) is added, by fitting onto said arbour (2) in abutment on said washer (3);
- said arbour thus prepared is placed in an injection mould including a complementary bearing and sealing surface arranged to cooperate in a sealed manner with said plane bearing surface (4) forming a bearing and sealing surface (40);
- a plastic overmoulding material for said arbour is injected into said mould, and during overmoulding in said mould, a portion of said pinion (5) is immobilised by the plastic material (11) used for overmoulding.
